# EUROPEAN PATENT SPECIFICATION

(11) **EP 4 060 136 B1**
(45) Date of publication and mention of the grant of the patent: **22.10.2025**
(21) Application number: 22161864.8
(22) Date of filing: 14.03.2022
(51) Int. Cl.: E03D 11/14, F16B 2/00, E03C 1/324

(54) **KIT FOR ANCHORING A TOILET OR BIDET TO A WALL, SYSTEM COMPRISING SAID KIT AND MOUNTING METHOD**
BAUSATZ ZUR BEFESTIGUNG EINER TOILETTE ODER EINES BIDES AN EINER WAND, SYSTEM MIT DIESEM BAUSATZ UND MONTAGEVERFAHREN
KIT POUR FIXER DES TOILETTES OU UN BIDET À UN MUR, SYSTÈME COMPRENANT LEDIT KIT ET PROCÉDÉ DE MONTAGE

(30) Priority: 16.03.2021 IT 202100006227
(43) Date of publication of application: 21.09.2022
(73) Proprietor: Sanitea S.R.L., 05100 Terni (IT)
(72) Inventor: CUCCINIELLO, Daniele, 05100 Terni (IT)
(74) Representative: Mannucci, Michele

(56) References cited:
- EP-A2- 0 877 125
- EP-A2- 0 984 107
- CN-A- 111 396 430
- DE-U1- 8 715 256

## Description

### TECHNICAL FIELD

The present invention relates to improvements to a fastening kit for anchoring a toilet or a bidet to a wall.

### BACKGROUND ART

Sanitary fixtures, such as toilets and bidets, may be mounted to the wall or to the floor. EP 0 877 125 A2 discloses a fastening kit for anchoring a sanitary fixture to a wall. In the first case, the sanitary fixture is anchored to a vertical wall by means of brackets embedded under the wall covering, to which anchoring bars are integral. In the second case, the sanitary fixture is placed on the floor, so that the weight of the sanitary fixture and the user sitting thereon is discharged onto the floor. In this case it is not necessary to have systems capable of bearing the load of the sanitary fixture and of the user, but it is in any case required to block the sanitary fixture with respect to the floor so that it does not move during use.

In some cases, the sanitary fixture is simply glued with silicone adhesive between the sanitary fixture and the floor or between the sanitary fixture and the wall. This anchoring system is rather rudimentary and has serious drawbacks when the sanitary fixture has to be moved, for example for repairs to the pipes.

In other cases, the sanitary fixture has horizontal edges intended to rest on the floor, which have through holes for the insertion of screws that engage in expansion plugs inserted into the floor. The anchoring screws remain visible from the outside of the sanitary fixture.

WO2020058276 discloses a kit for anchoring sanitary fixtures to the floor. This system includes a pair of brackets applicable to a fastening structure, for example on the wall or on the floor. Each bracket has a first flap with a first edge, along which a first recess and a first chamfer are arranged extending from a second edge of the first flap to the first recess. The kit also includes a pair of elements for fastening to a sanitary fixture. Each fastening member comprises a pin configured to fit into a recess of a corresponding one of said brackets.

EP3006635 discloses a different fastening kit, in which two elastic arms are fixed to the wall and co-act with undercuts on the sanitary fixture. The arms are fastened to the wall by means of anchoring bases, which act as a guide for the sanitary fixture for correct positioning. This kit is complex and expensive, and also does not allow mounting tolerances and therefore requires high installation precision.

CN 111396430 discloses a wall fastening system for a sanitary fixture, which comprises a pair of elastic clips intended to be fastened directly to a vertical wall by means of a wall plug. The clips co-act with two shaped plates fastened to the lateral walls of the sanitary fixture. The system is very difficult to use because the clips and plates must be fastened with extreme precision on the vertical wall and on the two lateral walls of the sanitary fixture. Even small assembly errors lead to the impossibility of anchoring the sanitary fixture to the wall, since the clips are not able to hook the plates fastened to the sanitary fixture. In case of inaccurate assembly, it is necessary to remove the plates and/or the clips and start the assembly work again.

There is therefore a continuous and constant search for sanitary anchoring systems that are efficient, cost-effective and easy to use.

### SUMMARY

A fastening kit which overcomes in whole or in part the drawbacks of the prior art is set forth in claim 1. Preferred embodiments are set forth in the dependent claims.

In practice, the kit has an anchoring element, adapted to be anchored to a vertical wall and comprising a C-shaped profile forming a linear guide. The kit further comprises a pair of elastic clips, fastenable to the anchoring element in adjustable positions along the linear guide formed by the C-shaped profile of the anchoring element. The kit further comprises a pair of pins adapted to be fastened to the toilet or bidet. Each pin is adapted to co-act with one of the elastic clips. During assembly, the C-shaped profile is applied to the wall in a horizontal position and the pins are mounted to the toilet or bidet in such a way that, when the toilet or bidet is placed
on the floor, the pins are oriented in a vertical direction. The clips are mounted on the profile such as to have openings oriented in the same direction as the pins.

In the present description and the appended claims, by "vertical" it is meant a direction oriented approximately in the direction of the force of gravity and by "horizontal" it is meant a direction orthogonal to the vertical direction.

As will be clear from the detailed description of a mounting process below, with this arrangement it is possible to easily adjust the position of the clips along the extension of the C-profile, placing the clips at a distance from each other equal to the distance at which the pins are mounted to the toilet or bidet. This greatly simplifies assembly, as any assembly errors in the horizontal direction are easily corrected.

Furthermore, the pins may be longer than the height of the clips, where the height is the size of the clip in the direction of the pin when the pin is inserted into the clip.

Further features and embodiments are described below and defined in the appended dependent claims.

### BRIEF DESCRIPTION OF THE DRAWINGS

The invention will be better understood by following the description and the accompanying drawings, which illustrate an exemplary and non-limiting embodiment of the invention. More particularly, the drawings show:
Fig. 1 an axonometric view of a toilet or bidet in an initial mounting step of the mounting kit;
Fig. 1A an enlargement of a detail of Fig. 1;
Fig. 2 an axonometric view similar to the view of Fig. 1 in a subsequent mounting step;
Fig. 2A an enlargement of a detail of Fig. 2;
Fig. 3 an axonometric view similar to the view of Fig. 2 in a subsequent mounting step;
Fig. 3A an enlargement of a detail of Fig. 3;
Fig. 4 a partial section of the toilet or bidet according to a horizontal plane, with the plates mounted;
Fig. 5 a rear view of the toilet or bidet of Fig. 4;
Fig. 6 a view of the plates with indication of the mutual distances when mounted to the sanitary fixture;
Fig. 7 an axonometric view of an initial mounting step of the anchoring element to the wall;
Fig. 7A an enlarged detail of Fig. 7 in a subsequent mounting step;
Fig. 8 an enlarged section of an elastic clip along a plane parallel to the arms of the elastic clip;
Fig. 9 an axonometric view of the anchoring element mounted to the wall;
Fig. 10 an axonometric view of the plumbing connections of the toilet or bidet and of the anchoring element mounted to the wall;
Fig. 10A an enlargement of the anchoring element being fastened to the vertical wall;
Fig. 11 a step of approaching the toilet or bidet to the anchoring element;
Fig. 11A an enlargement of a detail of Fig. 11;
Fig. 12 a plan view of the anchoring element fastened to the vertical wall and of the position of the plates during the step of approaching the toilet or bidet to the vertical wall;
Fig.13 a view similar to the view of Fig. 12, in a step of completion of the mounting;
Fig. 13A an enlargement of a detail illustrating the mutual position of one of the elastic clips and of the relative plate in the condition of Fig. 13;
Fig. 14 a view similar to the view of Fig. 12 in the condition of Fig. 13;
Fig. 15 an axonometric view of the final position of the toilet or bidet placed next to the wall;
Fig. 15A an enlargement of a clip and relative plate in the arrangement of Fig. 15; and
Fig. 16 a plan view similar to the view of Fig. 14 in the condition of Fig. 15.

### DETAILED DESCRIPTION

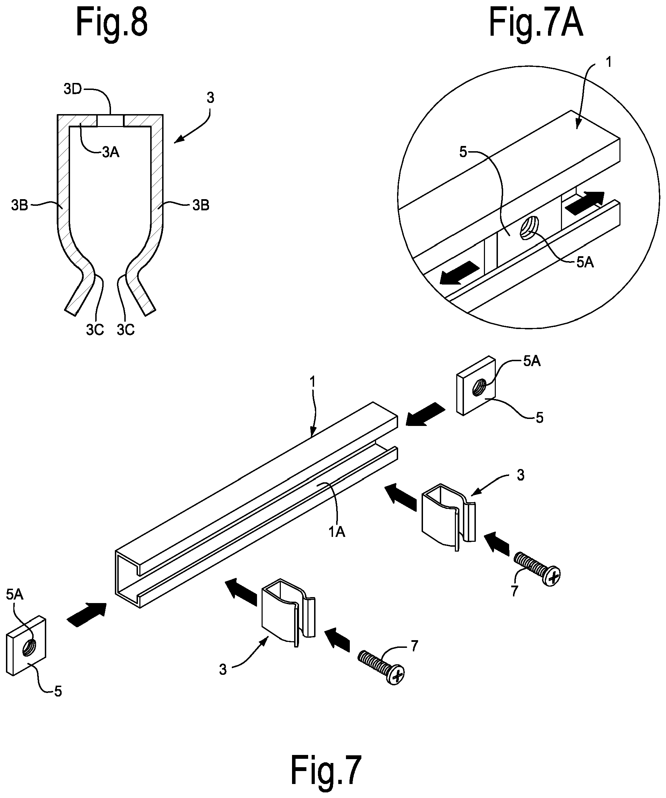

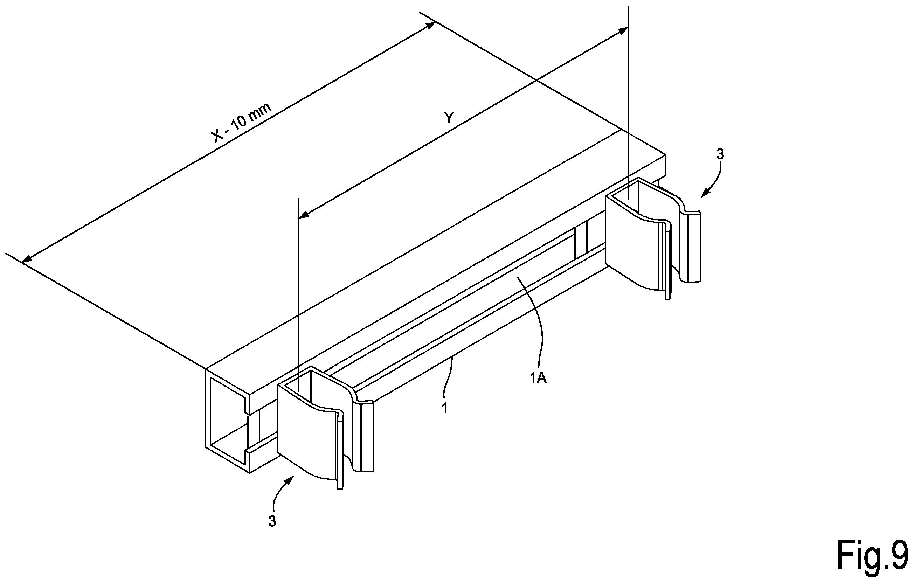

The kit comprises an anchoring element 1 intended to be anchored to a vertical wall Pv, against which a toilet or bidet S (in the example illustrated a toilet), which is mounted on the floor, must be brought to abut,. In the illustrated embodiment, the anchoring element 1 (see in particular Figs. 7, 7A, 8, 9) has the shape of a C-shaped profile, to allow the engagement of two elastic clips 3, which may be fastened in an adjustable position along the guide formed by the C-shaped profile, which constitutes the anchoring element 1.

In other embodiments, the anchoring element 1 may have a different form shape, still forming a linear guide to fix the elastic clips 3.

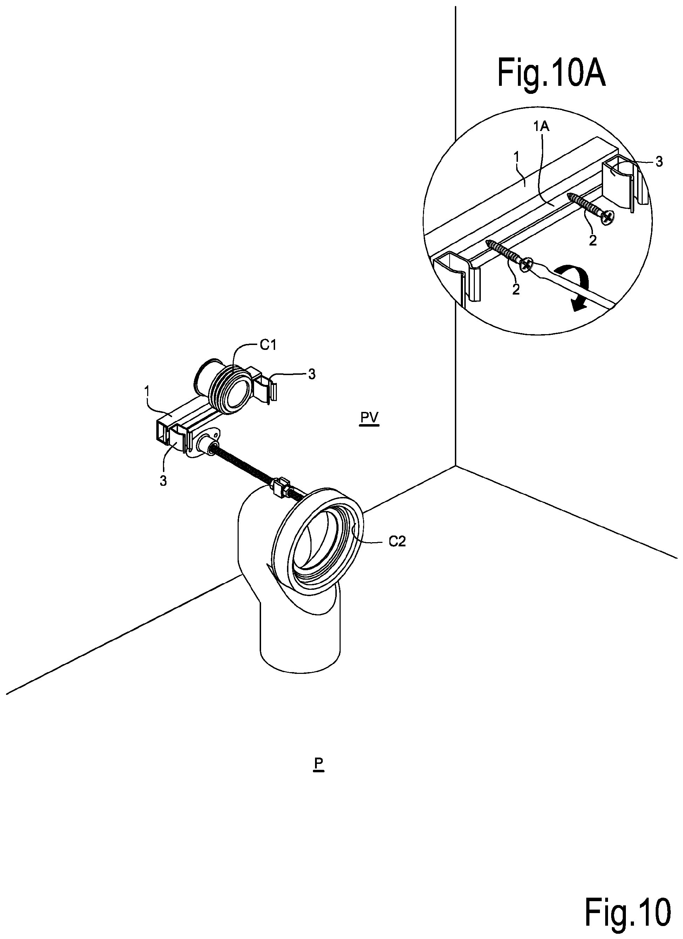

The anchoring element 1 may be fastened to the vertical wall by means of screws 2 (Fig. 10A) which can cooperate with expansion anchors (not shown), inserted in holes made in the vertical wall Pv.

In order to fasten the elastic clips 3 in an adjustable position along the linear extension of the C-shaped profile, two respective nuts 5 are provided, whose shape is such that they do not rotate when they are inserted into the longitudinal groove 1A of the C-shaped profile 1. In the illustrated example, the nuts 5 are square in shape. The elastic clips 3 have a central portion 3A from which two elastic arms 3B extend, which end at the distal ends with two folded portions 3C facing inwards of the elastic clip 3. The folded portions 3C define an entrance opening. A through hole 3D, into which a respective screw 7 is inserted, is formed in the central portion 3A. Each screw 7 is adapted to engage in a threaded through hole 5A of the respective square nut 5, in such a way as to press against the bottom of the groove 1A and lock the square nut 5 and the respective elastic clip 3 in position with respect to the C-shaped profile 1, pushing the nut 5 against the wall of the C-shaped profile 1, along which the longitudinal opening is made, i.e., the wall of the C-shaped profile opposite the vertical wall Pv on which the C-shaped profile 1 is fastened.

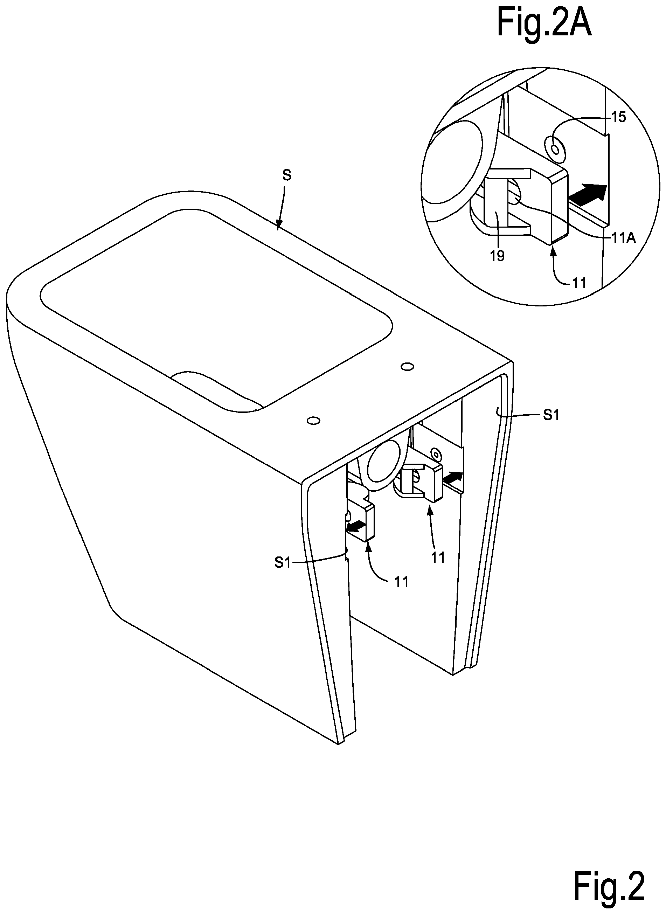

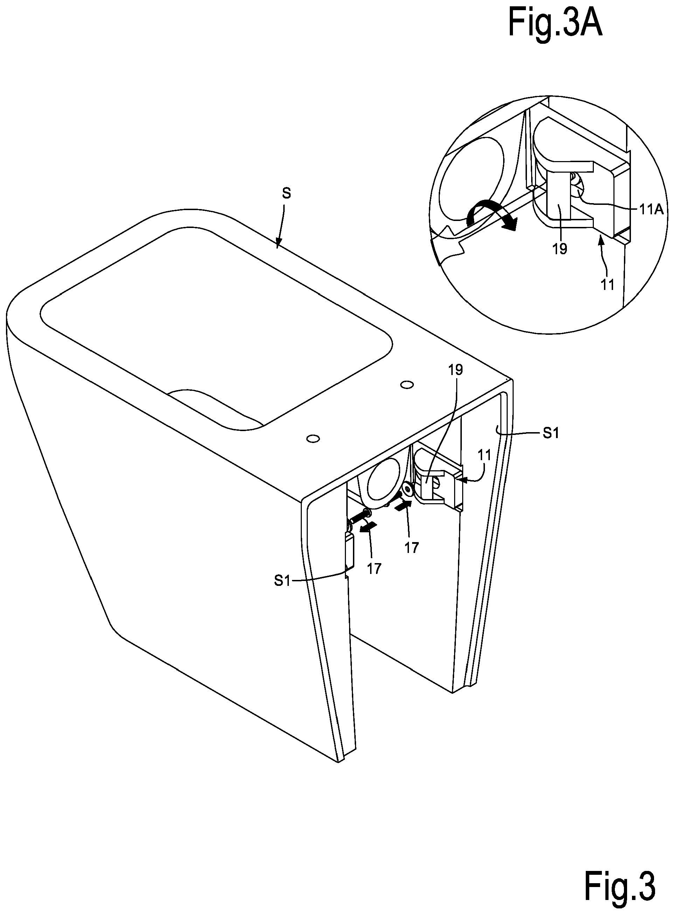

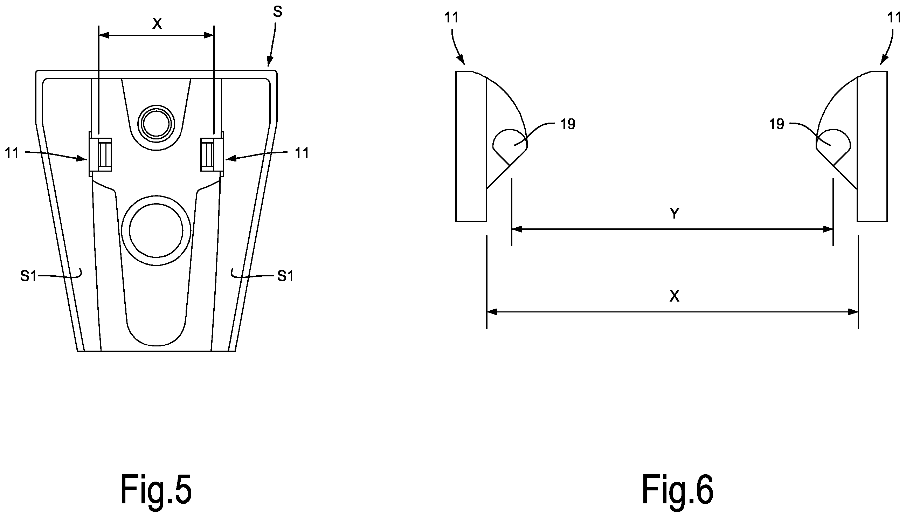

The kit also includes two plates 11 (see Figs. 2-6) intended to be fixed to two mutually opposed internal surfaces of two substantially vertical symmetrical walls S1 of the toilet or bidet S. For this purpose, along the walls S1 of the toilet or bidet S two, preferably blind, holes 13 may be provided. Two expansion anchors 15, adapted to cooperate with the screws 17, are inserted into the blind holes 13. The screws 17 are intended to be inserted in respective through holes 11A of each plate 11 to fasten the plate 11 to the toilet or bidet S.

Each plate 11 configures a pin 19 adapted to cooperate with one of the two elastic clips 3.

In advantageous embodiments, the pin 19 is made in one piece with the plate 11. Advantageously, it may be provided that the plate 11 and the pin 19 are made of plastic, i.e. polymeric, material of sufficient mechanical strength and soft enough not to damage the ceramic of which the toilet or bidet S is made.

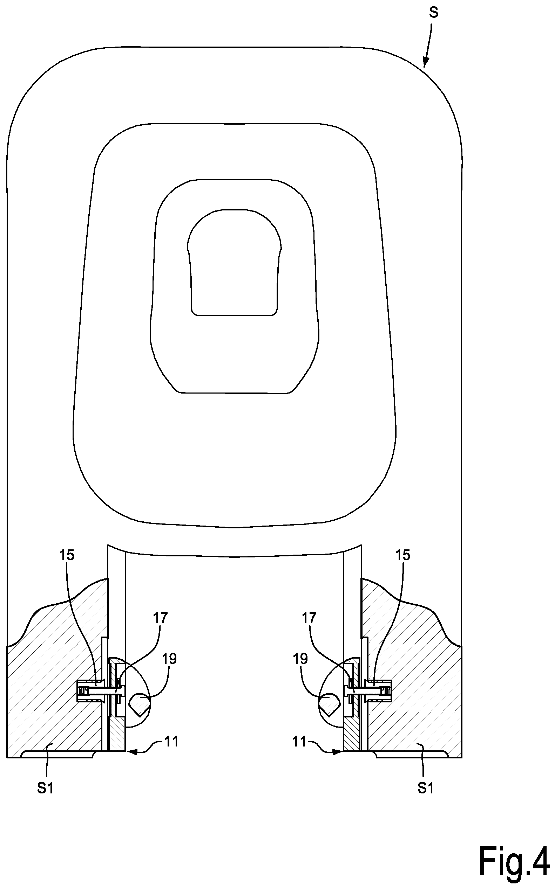

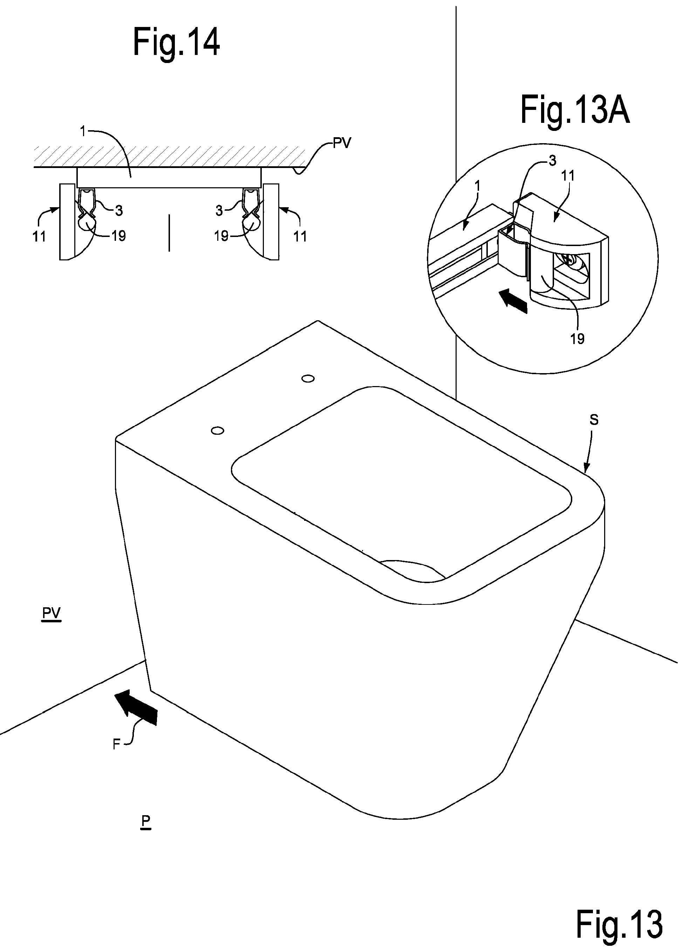

In advantageous embodiments, as shown in particular in Figs. 4, 6, 12, 14, each pin 19 has a non-cylindrical cross section, to facilitate the snap insertion of the respective elastic clip 3 around the pin 19, as described in greater detail below. For example, each pin 19 has a drop-shaped cross section, which has a cusp which, in use, faces the wall against which the toilet or bidet S is to be mounted and on which the C-shaped profile 1 is fastened.

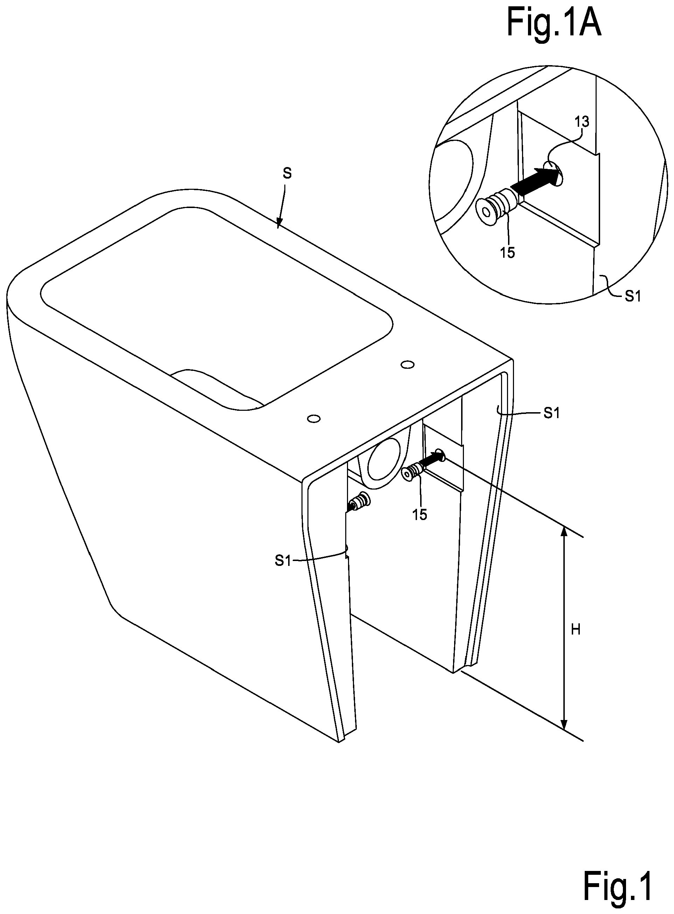

To carry out the assembly of a toilet or bidet S resting on a floor P and mounted against a vertical wall Pv, the following procedure is followed. The two plates 11 are applied to the toilet or bidet S by means of the two expansion anchors 15 and the two screws 17 (see Figs. 1 to 6). The two plates 11 are arranged inside the lateral walls S1 of the toilet or bidet S, in a position such as not to be visible from the outside when the toilet or bidet is mounted against the vertical wall Pv. The assembly is carried out in such a way that the pins 19 are in a position such that, when the toilet or bidet S is resting on the floor P, in position of use, the pins 19 are oriented vertically.

The anchoring element 1 must be fastened on the vertical wall Pv, with operations illustrated in particular in Figs. 7 to 10A. For this purpose, two holes are drilled in the vertical wall Pv for the insertion of expansion anchors for the screws 2. The holes in the vertical wall Pv are made at a height H corresponding to the height H at which the holes 13 of the toilet or bidet S are located for fastening the plates 11.

At this point, the C-shaped profile 1 may be fastened to the vertical wall Pv by means of the screws 2. The profile 1 may be cut to size so that its length L is shorter than the distance X between the free and opposite surfaces of the two plates 11 once they are mounted to the toilet or bidet S. For this purpose, each plate 11 is fixed by means of the respective screw 17 and the expansion anchor 15. Due to the fact that the C-shaped profile 1 has a length L shorter than the distance X, the anchoring element 1 does not touch the toilet or bidet S or parts integral therewith during assembly.

The anchoring element 1 is mounted in a horizontal position, i.e. with the linear guide formed by the C-shaped profile 1 in a horizontal position. In assembled condition, therefore, the pins 19 are oriented at 90° with respect to the anchoring element 1.

Y indicates the distance between the axes of the pins 19. The elastic clips 3 are then fastened along the C-shaped profile 1 at a distance equal to Y. More exactly, the clips 3 are fastened in such a way that the distance between the median vertical planes of the two elastic clips 3 are at the distance Y, corresponding to the distance between the axes of the vertical pins 19 and therefore the distance between the cusps of the two transversal drop sections of the pins themselves.

The median vertical planes pass through the opening of each elastic clip 3 defined by the respective opposite bent distal ends (bent portions 3C), which define inlet openings for insertion of the pins 19 into the clips 3 as described below. Then the clips 3 are fastened to the C-shaped profile 1 so that the respective opening (defined by the opposite bent portions 3C) is oriented in the vertical direction, i.e., parallel to the pins 19.

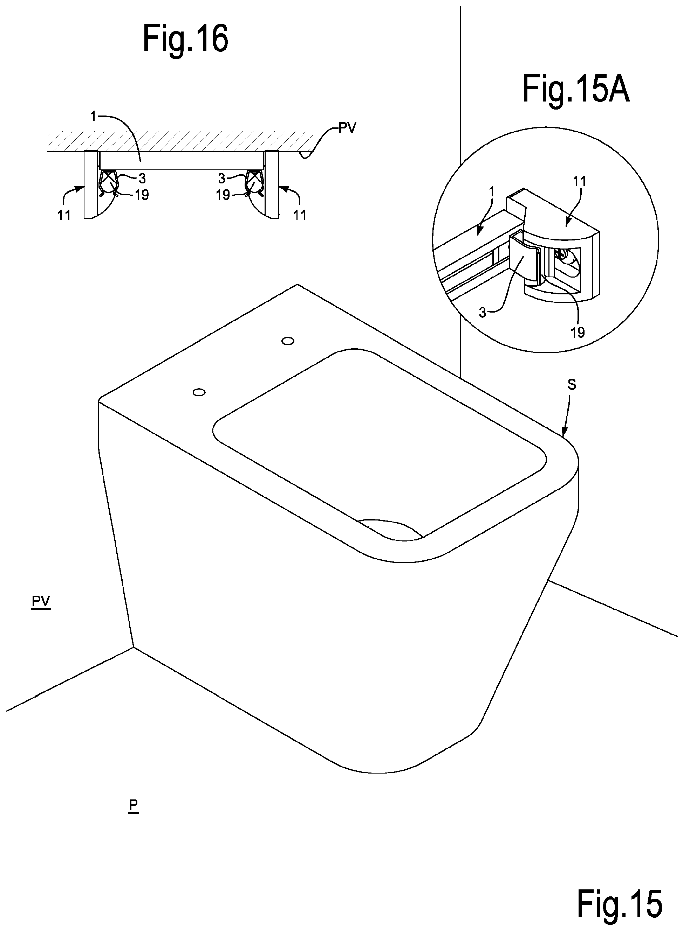

Advantageously, in general the pins 19 have a height greater than the width of the clips 3, where the height of the clip means the vertical dimension of the clip 3 (when the clip is mounted on the wall). The difference between the height of the clip 3 and the length of the pin 19 is clearly visible in Fig. 15A, for example. This allows compensating for any mismatch in the vertical direction between clips 3 pins 19.

As mentioned above, the elastic clips 3 are fastened in the desired position along the C-shaped profile 1 by means of the screws 7 and the square nuts 5 by screwing the screws 7 into the threaded through holes 5A, so as to lock the nuts 5 in the groove 1A of the C-shaped profile 1.

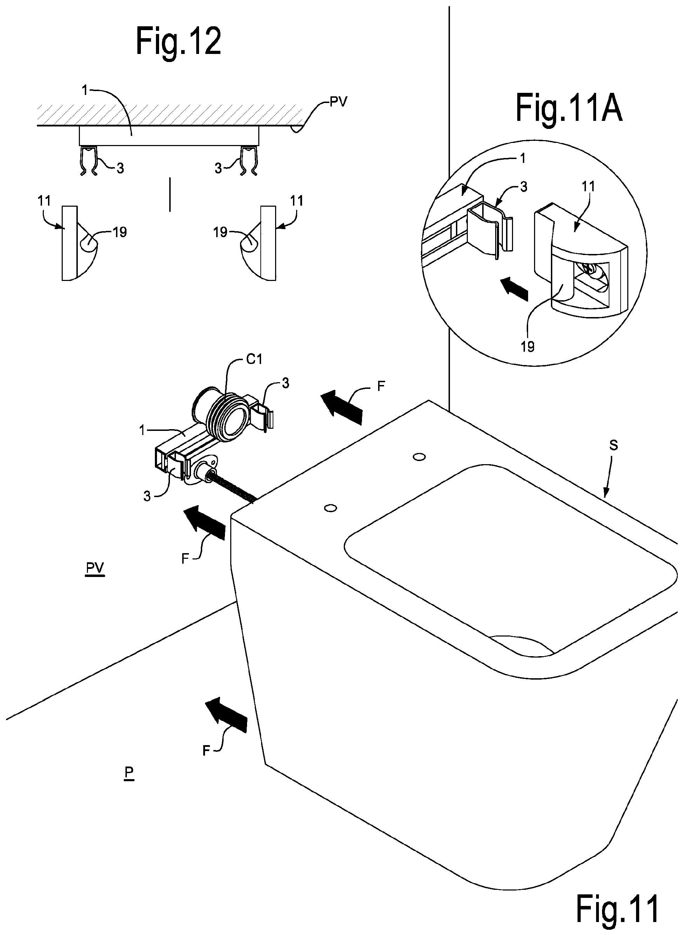

Once these operations have been carried out, the toilet or bidet S can be placed on the floor P, with the vertical median plane thereof aligned with the center line of the C-shaped profile 1, and made to slide along the floor (arrow F; Figs. 11 to 15) until the toilet or bidet abuts against the vertical wall Pv. Preliminarily, the connections for the flush water inlet (pipe C1) and for the discharge pipe (pipe C2) are made. The discharge pipe C2 may be on the floor, as in the example illustrated, or on the wall, depending on the toilet or bidet model used. If the sanitary fixture S is a bidet, two connections for feeding hot and cold water will be arranged, instead of a single connection for the inlet of the flush water.

Having fastened the C-shaped profile 1 on the wall Pv and the elastic clips 3 in the correct position with respect to the C-shaped profile 1, the toilet or bidet S is hooked to the elastic clips 3 by effect of its approaching movement to the vertical wall Pv, so that the pins 19 snap into the respective elastic clips 3. The assembly of the various components is very simple and does not require high precision. In fact, if the distance at which the elastic clips 3 are mounted to the C-shaped profile 1 is not equal to Y, it will be sufficient to loosen the screws 7 and proceed with the correct repositioning of the elastic clips 3. Furthermore, advantageously, the pins 19 may have a height greater than the height of the elastic clips 3. In this way, if the C-shaped profile 1 is not mounted exactly at height H (distance from the floor of the holes 13 of the walls S1 of the toilet or bidet S), the difference in height between the pins 19 and the elastic clips 3 is such as to provide a high tolerance margin and in any case allow the pins 19 to be hooked into the elastic clips 3.

With the system described, comprising the assembly kit and the toilet or bidet, a simple and rapid assembly of the toilet or bidet S is obtained, without the need for great assembly precision. Mounting errors in the horizontal direction are easily corrected by loosening at least one of the screws 7 and changing the relative position of one or both clips 3 along the C-shaped profile 1. Errors in the vertical direction are easily compensated by the fact that the clips 3 have a height less than the length of the pins 19.

## Claims

1. A fastening kit for anchoring a toilet or a bidet (S) to a wall, comprising:
an anchoring element (1), intended to be anchored to a vertical wall (Pv); wherein the anchoring element features alinear guide;
a pair of elastic clips (3), fastenable to the anchoring element (1) in adjustable positions along the linear guide formed by the anchoring element; and
a pair of pins (19) adapted to be fastened to the toilet or bidet (S), each pin being adapted to cooperate with one of the elastic clips (3).

2. The kit of claim 1, wherein the anchoring element comprises a C-shaped profile (1) forming the linear guide.

3. The kit of claim 1 or 2, wherein the elastic clips (3) each have a central portion (3A) from which two opposed elastic arms (3B) extend which end at the distal ends with two folded portions (3C) facing inwards of the elastic clip (3) to snap engage the respective pin (19).

4. The kit of claim 1 or 2 or 3, wherein each elastic clip (3) is fastenable to the linear guide by means of a screw system (5, 7).

5. The kit of claim 4 when dependent on claim 3, wherein the screw system comprises, for each elastic clip (3), a nut (5) engageable in a groove (1A) of the anchoring element (1), and a screw (7) engageable with the nut (5); and wherein each elastic clip (3) has a through hole (3D), arranged between the two opposed elastic arms (3B), within which the respective screw (7) is engageable to constrain the elastic clip (3) to the respective nut (5).

6. The kit of one or more of the preceding claims, wherein each pin (19) is integral with a plate (11) fastenable to the toilet or bidet (S), with the pin in a vertical position when the toilet or bidet (S) is mounted.

7. The kit of claim 6, wherein each pin (19) and the respective plate (11) are formed by a single block, preferably made of polymeric material.

8. The kit of claim 6 or 7, wherein the plate (11) has a through hole (11A) for the insertion of an anchoring screw (17) to the toilet or bidet (S).

9. The kit of claim 8, wherein the anchoring screw (17) to the toilet or bidet (S) is intended to cooperate with an expansion anchor (15) adapted to be housed in a hole (13) in a wall (S1) of the toilet or bidet (S).

10. The kit of one or more of the preceding claims, wherein each pin (19) has a shaped lateral guiding surface, to facilitate coupling of the respective elastic clip (3).

11. A system comprising a toilet or bidet (S) and a fastening kit according to one or more of the preceding claims.

12. The system of claim 11, wherein the toilet or bidet (S) comprises two lateral walls (S1), each lateral wall having a transverse hole (13) configured to fasten a respective plate (11; 111) of the fastening kit, with the respective pin (19 ) in a position orthogonal to a support surface of the toilet or bidet (S) on the floor.

13. A method for anchoring a floor-standing toilet or bidet (S) to a vertical wall by means of a kit according to one or more of claims 1 to 10; the method comprising the following steps:
fastening the anchoring element (1) to a vertical wall (Pv) with the linear guide in horizontal position;
constraining a pair of elastic clips (3) to the anchoring element (1) at a distance (Y) along the linear guide;
fastening to each lateral wall of a toilet or bidet (S) a respective pin (19) oriented with respect to the toilet or bidet (S) so as to be arranged vertically when the toilet or bidet (S) is positioned for use;
approaching the toilet or bidet (S) to the vertical wall (Pv) by sliding the toilet or bidet (S) on a floor until the pins are inserted into the elastic clips.

## Patentansprüche

1. Befestigungssatz zum Verankern einer Toilette oder eines Bidets (S) an einer Wand, umfassend:
ein Verankerungselement (1), das zur Verankerung an einer vertikalen Wand (Pv) vorgesehen ist; wobei das Verankerungselement eine lineare Führung aufweist;
ein Paar elastischer Klammern (3), die an dem Verankerungselement (1) in einstellbaren Positionen entlang der durch das Verankerungselement gebildeten linearen Führung befestigt werden können; und
ein Paar Stifte (19), die zur Befestigung an der Toilette oder dem Bidet (S) ausgebildet sind, wobei jeder Stift zum Zusammenwirken mit einer der elastischen Klammern (3) ausgebildet ist.

2. Befestigungssatz gemäß Anspruch 1, wobei das Verankerungselement ein C-förmiges Profil (1) umfasst, das die lineare Führung bildet.

3. Befestigungssatz gemäß Anspruch 1 oder 2, wobei die elastischen Klammern (3) jeweils einen zentralen Abschnitt (3A) aufweisen, von dem sich zwei gegenüberliegende elastische Arme (3B) erstrecken, die an den distalen Enden mit zwei nach innen gerichteten gefalteten Abschnitten (3C) der elastischen Klammer (3) enden, um den jeweiligen Stift (19) einzurasten.

4. Befestigungssatz gemäß Anspruch 1 oder 2 oder 3, wobei jede elastische Klammer (3) mittels eines Schraubensystems (5, 7) an der linearen Führung befestigbar ist.

5. Befestigungssatz gemäß Anspruch 4, wenn abhängig von Anspruch 3, wobei das Schraubsystem für jede elastische Klammer (3) eine Mutter (5), die in eine Nut (1A) des Verankerungselements (1) eingreifen kann, und eine Schraube (7) umfasst, die mit der Mutter (5) in Eingriff gebracht werden kann; und wobei jede elastische Klammer (3) ein Durchgangsloch (3D) aufweist, das zwischen den beiden gegenüberliegenden elastischen Armen (3B) angeordnet ist, in das die jeweilige Schraube (7) eingreifen kann, um die elastische Klammer (3) an der jeweiligen Mutter (5) zu befestigen.

6. Befestigungssatz gemäß einem oder mehreren der vorangegangenen Ansprüche, wobei jeder Stift (19) einstückig mit einer Platte (11) ausgebildet ist, die an der Toilette oder dem Bidet (S) befestigt werden kann, wobei sich der Stift in einer vertikalen Position befindet, wenn die Toilette oder das Bidet (S) montiert ist.

7. Befestigungssatz gemäß Anspruch 6, wobei jeder Stift (19) und die jeweilige Platte (11) aus einem einzigen Block bestehen, vorzugsweise aus Polymermaterial.

8. Befestigungssatz gemäß Anspruch 6 oder 7, wobei die Platte (11) ein Durchgangsloch (11A) zum Einführen einer Verankerungsschraube (17) in die Toilette oder das Bidet (S) aufweist.

9. Befestigungssatz gemäß Anspruch 8, wobei die Verankerungsschraube (17) zur Befestigung an der Toilette oder dem Bidet (S) dazu bestimmt ist, mit einem Spreizanker (15) zusammenzuwirken, der in einem Loch (13) in einer Wand (S1) der Toilette oder des Bidets (S) aufgenommen werden kann.

10. Befestigungssatz gemäß einem oder mehreren der vorangegangenen Ansprüche, wobei jeder Stift (19) eine geformte seitliche Führungsfläche aufweist, um das Einrasten der jeweiligen elastischen Klammer (3) zu erleichtern.

11. System, umfassend eine Toilette oder ein Bidet (S) und einen Befestigungssatz gemäß einem oder mehreren der vorangegangenen Ansprüche.

12. System gemäß Anspruch 11, wobei die Toilette oder das Bidet (S) zwei Seitenwände (S1) umfasst, wobei jede Seitenwand ein Querloch (13) aufweist, das so ausgebildet ist, dass es eine jeweilige Platte (11; 111) des Befestigungssatzes mit dem jeweiligen Stift (19) in einer Position orthogonal zu einer Auflagefläche der Toilette oder des Bidets (S) auf dem Boden befestigt.

13. Verfahren zum Verankern einer bodenstehenden Toilette oder Bidets (S) an einer vertikalen Wand mittels eines Befestigungssatzes gemäß einem oder mehreren der Ansprüche 1 bis 10, wobei das Verfahren die folgenden Schritte umfasst:
Befestigen des Verankerungselements (1) an einer vertikalen Wand (Pv) mit der linearen Führung in horizontaler Position;
Anbringen eines Paares elastischer Klammern (3) an dem Verankerungselement (1) in einem Abstand (Y) entlang der linearen Führung;
Befestigen eines jeweiligen Stifts (19) an jeder Seitenwand einer Toilette oder eines Bidets (S), wobei der Stift in Bezug auf die Toilette oder das Bidet (S) so ausgerichtet ist, dass er vertikal angeordnet ist, wenn die Toilette oder das Bidet (S) zur Verwendung positioniert ist;
Heranführen der Toilette oder des Bidets (S) an die vertikale Wand (Pv) durch Verschieben der Toilette oder des Bidets (S) auf dem Boden, bis die Stifte in die elastischen Klammern eingeführt sind.

## Revendications

1. Un kit de fixation pour ancrer une cuvette ou un bidet (S) à une paroi, comprenant :
un élément d'ancrage (1), destiné à être ancré à une paroi verticale (Pv), l'élément d'ancrage formant un guide linéaire ;
une paire de clips élastiques (3), pouvant être fixés à l'élément d'ancrage (1) à des positions réglables le long du guide linéaire formé par l'élément d'ancrage ; et
une paire de tiges (19) aptes à être fixées à la cuvette ou au bidet (S), chaque tige étant apte à coopérer avec l'un des clips élastiques (3).

2. Le kit selon la revendication 1, dans lequel l'élément d'ancrage comprend un profil en forme de C (1) formant le guide linéaire.

3. Le kit selon la revendication 1 ou 2, dans lequel les clips élastiques (3) ont chacun une partie centrale (3A) à partir de laquelle deux bras élastiques opposés (3B) s'étendent, lesquels se terminent à leurs extrémités distales avec deux parties pliées (3C) tournées vers l'intérieur du clip élastique (3) pour l'engagement par pression de la tige respective (19).

4. Le kit selon la revendication 1 ou 2 ou 3, dans lequel chaque clip élastique (3) peut être fixé au guide linéaire au moyen d'un système à vis (5, 7).

5. Le kit selon la revendication 4 lorsqu'elle est dépendante de la revendication 3, dans lequel le système à vis comprend, pour chaque clip élastique (3), un écrou (5) pouvant s'engager dans une rainure (1A) de l'élément d'ancrage (1) et une vis (7) pouvant coopérer avec l'écrou (5) ; et dans lequel chaque clip élastique (3) a un trou traversant (3D), agencé entre les deux bras élastiques opposés (3B), dans lequel la vis respective (7) peut s'engager pour contraindre le clip élastique (3) par rapport à l'écrou respectif (5).

6. Le kit selon l'une ou plusieurs des revendications précédentes, dans lequel chaque tige (19) est d'un seul tenant avec une plaque (11) pouvant être fixée à la cuvette ou au bidet (S), la tige étant en position verticale lorsque la cuvette ou le bidet (S) est monté.

7. Le kit selon la revendication 6, dans lequel chaque tige (19) et la plaque respective (11) sont formées d'un bloc unique, de préférence constitué de matériau polymère.

8. Le kit selon la revendication 6 ou 7, dans lequel la plaque (11) a un trou traversant (11A) pour l'introduction d'une vis d'ancrage (17) à la cuvette ou le bidet (S).

9. Le kit selon la revendication 8, dans lequel la vis d'ancrage (17) à la cuvette ou au bidet (S) est destinée à coopérer avec une ancre d'expansion (15) apte à être logée dans un trou (13) dans une paroi (S1) de la cuvette ou du bidet (S).

10. Le kit selon l'une ou plusieurs des revendications précédentes, dans lequel chaque tige (19) a une surface de guidage latéral conformée pour faciliter le couplage du clip élastique respectif.

11. Un système comprenant une cuvette ou un bidet (S) et un kit de fixation selon l'une ou plusieurs des revendications précédentes.

12. Le système selon la revendication 11, dans lequel la cuvette ou le bidet (S) comprend deux parois latérales (S1), chaque paroi latérale ayant un trou transversal (13) configuré pour fixer une plaque respective (11 ; 111) du kit de fixation, avec la tige respective (19) dans une position perpendiculaire à une surface de support de la cuvette ou du bidet (S) sur le sol.

13. Un procédé d'ancrage d'une cuvette ou d'un bidet (S) reposant sur le sol à une paroi verticale au moyen d'un kit selon l'une ou plusieurs des revendications 1 à 10 ; ce procédé comprenant les étapes suivantes consistant à :
fixer l'élément d'ancrage (1) à une paroi verticale (Pv) avec le guide linéaire en position horizontale ;
contraindre une paire de clips élastiques (3) à l'élément d'ancrage (1) à une distance (Y) le long du guide linéaire ;
fixer à chaque paroi latérale d'une cuvette ou d'un bidet (S) une tige respective (19) orientée par rapport à la cuvette ou au bidet (S) de façon à ce qu'elle soit agencée verticalement lorsque la cuvette ou le bidet (S) est positionné pour l'utilisation ;
approcher la cuvette ou le bidet (S) de la paroi verticale (Pv) par coulissement de la cuvette ou du bidet (S) sur un sol jusqu'à ce que les tiges soient insérées dans les clips élastiques.
